(19) Europäisches Patentamt
European Patent Office
Office européen des brevets

(11) **EP 1 732 793 B2**

(12) **NOUVEAU FASCICULE DE BREVET EUROPEEN**
Après la procédure d'opposition

(45) Date de publication et mention de la décision concernant l'opposition:
**26.10.2016 Bulletin 2016/43**

(45) Mention de la délivrance du brevet:
**27.10.2010 Bulletin 2010/43**

(21) Numéro de dépôt: **05728301.2**

(22) Date de dépôt: **04.04.2005**

(51) Int Cl.:
**B60S 1/38** $^{(2006.01)}$

(86) Numéro de dépôt international:
**PCT/EP2005/003507**

(87) Numéro de publication internationale:
**WO 2005/108177 (17.11.2005 Gazette 2005/46)**

(54) **BALAI D'ESSUIE-GLACE DE TYPE FLAT-BLADE COMPORTANT UN DÉFLECTEUR AÉRODYNAMIQUE**

FLACHBLATT-SCHEIBENWISCHERBLATTARM MIT AERODYNAMISCHEM LEITBLECH

FLAT-BLADE WIPER BLADE ARM COMPRISING AN AERODYNAMIC BAFFLE

(84) Etats contractants désignés:
**AT BE BG CH CY CZ DE DK EE ES FI FR GB GR HU IE IS IT LI LT LU MC NL PL PT RO SE SI SK TR**

(30) Priorité: **07.04.2004 FR 0403619**

(43) Date de publication de la demande:
**20.12.2006 Bulletin 2006/51**

(73) Titulaire: **VALEO SYSTEMES D'ESSUYAGE**
**78321 La Verrière (FR)**

(72) Inventeurs:
• **JARASSON, Jean-Michel**
**F-78990 Elancourt (FR)**
• **JALLET, Sébastien**
**F-78310 Maurepas (FR)**
• **DUBIEF, Flavien**
**F-78180 Montigny-Le-Bretonneux (FR)**

(56) Documents cités:
**EP-A- 1 232 922      DE-A- 10 000 373**
**DE-A- 10 034 790      DE-A- 10 036 115**
**DE-A- 10 319 346      US-A1- 2003 145 412**

EP 1 732 793 B2

## Description

La présente invention concerne un balai d'essuie-glace de véhicule automobile du type "flat-blade".

L'invention concerne notamment un balai d'essuie-glace de véhicule automobile du type comportant

-   une monture de support d'orientation principale longitudinale, qui comporte des moyens inférieurs de support d'une raclette d'essuyage et un corps tubulaire d'axe principal longitudinal qui est délimité par une paroi horizontale supérieure, une paroi horizontale inférieure et par deux parois latérales longitudinales verticales ;
-   un élément structurel en forme de lame horizontale longitudinale, qui est reçu à l'intérieur du corps tubulaire.

Afin d'améliorer les performances aérodynamiques d'un tel balai d'essuie-glace, comme cela a notamment été proposé dans les documents US-B1-6.292.974, US-A1-2003/0145412 et US-A-2002/0000018, on connaît un balai d'essuie-glace de véhicule automobile du type comportant :

-   un élément longitudinal central de rigidification;
-   une raclette d'essuyage de la vitre à essuyer qui s'étend longitudinalement en dessous de l'élément central et qui comporte un bord longitudinal inférieur d'essuyage qui coopère avec la face de la vitre à essuyer ; et
-   un élément formant déflecteur aérodynamique qui s'étend longitudinalement au-dessus de l'élément central de rigidification et le long d'au moins un tronçon de ce dernier et qui, en section par un plan vertical transversal, présente un contour de forme globalement triangulaire comportant un côté inférieur horizontal de base, un côté amont qui délimite la face au vent du déflecteur aérodynamique, et un côté aval d'orientation globalement verticale qui délimite la face sous le vent du déflecteur et qui est relié au côté amont par un tronçon qui délimite le bord longitudinal supérieur d'extrémité libre supérieure du déflecteur.

Afin d'améliorer encore les performances aérodynamiques du balai d'essuie-glace et de son déflecteur aérodynamique, l'invention propose un balai d'essuie-glace du type qui précède, **caractérisé en ce que** le rapport H/L entre la hauteur totale H du balai d'essuie-glace séparant le bord supérieur du déflecteur aérodynamique du bord inférieur d'essuyage de la lame d'essuyage, et la largeur transversale hors-tout du balai d'essuie-glace, mesurée dans le plan de l'élément de rigidification, est compris entre 1,5 et 2.

On connaît également du document EP 1 232 922 un balai d'essuie-glace comprenant une monture de support d'orientation principale longitudinale, qui comporte un logement interne pour un élément longitudinal central de rigidification, des moyens inférieurs de support d'une raclette d'essuyage, et un élément formant déflecteur aérodynamique.

Selon d'autres caractéristiques d l'invention :

-   le côté amont du contour triangulaire comporte un tronçon inférieur sensiblement rectiligne qui forme un angle aigu B par rapport au bord inférieur horizontal ;
-   ledit angle aigu B est compris entre 5 et 35 degrés ;
-   ledit tronçon inférieur s'étend sensiblement jusqu'au droit d'un plan vertical médian de l'élément central de rigidification et de la raclette inférieure d'essuyage ;
-   ledit tronçon inférieur du côté amont du contour triangulaire est suivi d'un tronçon intermédiaire sensiblement en arc de cercle concave ;
-   le rayon R dudit tronçon intermédiaire concave est compris entre 50% et 70% de ladite largeur totale hors-tout ;
-   le côté amont du contour triangulaire comporte un tronçon supérieur d'extrémité ;
-   ledit tronçon supérieur d'extrémité du côté amont est sensiblement rectiligne et d'orientation verticale ;
-   le tronçon supérieur d'extrémité du côté amont est sensiblement en arc de cercle convexe ;
-   ledit tronçon supérieur d'extrémité du côté amont s'étend sur une hauteur verticale marginale Hv qui est comprise entre 15% et $\leq$ 25% de la hauteur totale Hsp du déflecteur aérodynamique ;
-   le côté aval du contour triangulaire comporte un tronçon supérieur qui est globalement parallèle au tronçon supérieur du côté amont ;
-   le côté aval du contour triangulaire comporte un tronçon intermédiaire qui est globalement parallèle au tronçon intermédiaire du côté amont ;
-   le tronçon supérieur rectiligne du côté aval s'étend au droit du bord latéral aval de l'élément central de rigidification ;
-   le côté aval du contour triangulaire comporte un tronçon inférieur en arc de cercle concave ;
-   le point transversalement le plus intérieur du tronçon inférieur en arc de cercle concave du côté aval est situé transversalement en retrait vers l'intérieur par rapport au bord latéral aval de l'élément central de rigidification ;
-   la distance horizontale P séparant ledit point le plus intérieur du bord latéral aval de l'élément central de support est comprise entre 15% et 25% de ladite largeur totale hors-tout L ;
-   le tronçon qui délimite le bord supérieur du déflecteur aérodynamique est de forme semi-circulaire ;
-   l'épaisseur e de la partie supérieure du déflecteur aérodynamique séparant les deux tronçons supérieurs verticaux et rectilignes est comprise entre 8% et 15% de ladite largeur totale hors-tout L.

D'autres caractéristiques et avantages de l'invention apparaîtront à la lecture de la description détaillée qui va suivre pour la compréhension de la quelle on se reportera aux dessins annexés dans lesquels :

- la figure 1 est une vue schématique à grande échelle qui représente, en section par un plan vertical transversal, un tronçon caractéristique d'un premier exemple de réalisation d'un balai d'essuie-glace réalisé conformément aux enseignements de l'invention ;
- la figure 2 est une vue analogue à celle de la figure 1 qui illustre une première variante de réalisation de la conformation générale du déflecteur aérodynamique, non couverte par la revendication 1;
- la figure 3 est une vue analogue à celle de la figure 1 qui illustre la partie supérieure du balai d'essuie-glace avec une deuxième variante de réalisation de la conformation générale du déflecteur aérodynamique, non couverte par la revendication 1;
- les figures 4 et 5 sont deux vues de détail qui illustrent deux variantes de la partie supérieure du déflecteur aérodynamique du balai d'essuie-glace selon l'invention;
- la figure 6 est une vue de détail qui illustre une variante de réalisation du bord d'attaque non couverte par la revendication 1.

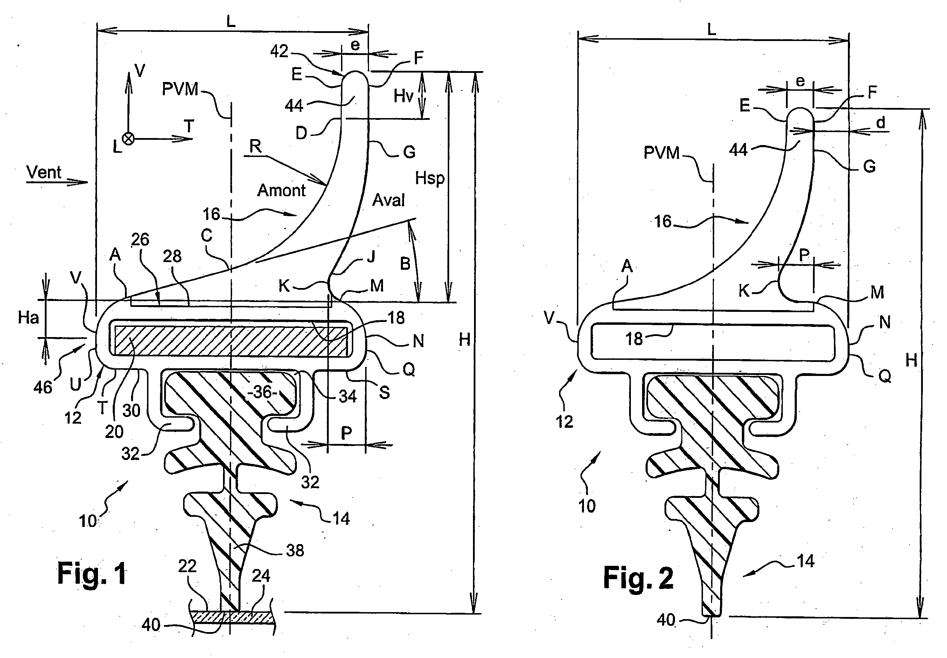

Dans la description qui va suivre et dans les revendications, on adoptera - à titre non limitatif et en vue d'en faciliter la compréhension - les termes vertical, horizontal, inférieur, supérieur, en référence à l'orientation des figures et du trièdre L, V, T indiqué à la figure 1 qui correspond aux directions Longitudinale (direction principale du balai d'essuie-glace), Verticale, et Transversale (correspondant aussi à la référence horizontale).

Des éléments et composants identiques, similaires ou analogues seront désignés par les mêmes références.

Le balai d'essuie-glace 10 illustré à la figure 1 est essentiellement constitué d'une monture de support d'orientation principale longitudinale, qui comporte des moyens inférieurs de support d'une raclette d'essuyage et un corps tubulaire d'axe principal longitudinal qui est délimité par une paroi horizontale supérieure, une paroi horizontale inférieure et par deux parois latérales longitudinales verticales.

Le corps central tubulaire 12 qui est par exemple réalisé par moulage en matière plastique rigide ou semi-rigide.

Le balai d'essuie-glace 10 illustré à la figure 1 est aussi constitué d'une raclette inférieure 14 d'essuyage en caoutchouc ou en matériau élastomère naturel ou synthétique réalisée par extrusion, et d'un déflecteur ou spoiler aérodynamique supérieur 16 en matériau synthétique rigide ou souple rapporté sur le corps central 12 ou réalisé par co-extrusion ou co-moulage avec ce corps 12.

Le corps central 12 est globalement de section rectangulaire avec son grand côté orienté selon l'horizontale et son petit côté selon la verticale. Le corps central 12 présente une symétrie générale de conception par rapport au plan vertical médian PVM qui est aussi le plan de symétrie de la raclette inférieure d'essuyage 14.

Le corps central creux 12 délimite un logement interne creux 18 de contour rectangulaire dans lequel est reçu avec jeu, de manière à permettre de légers déplacements relatifs notamment selon la direction longitudinale, un élément structurel en forme de lame horizontale longitudinale un élément longitudinal central 20 de section rectangulaire qui est un élément structurel en forme de lame horizontale longitudinale, ou vertèbre de rigidification, qui en association avec le corps creux 12 constitue la structure du balai d'essuie-glace 10 de type "flatblade" et qui confère aussi au balai d'essuie-glace son élasticité dans le plan vertical et longitudinal lui permettant de s'adapter à la conformation, et notamment au galbe, de la face externe ou face supérieure 22 de la vitre 24 à essuyer.

La face supérieure du corps central 12 comporte un logement ou évidement supérieur 26 à fond horizontal plat qui reçoit la partie inférieure du déflecteur 16.

Le corps central 12 se prolonge verticalement vers le bas sous sa face inférieure 30 par des tronçons de deux nervures opposées 32 à section en "L" formant crochets qui délimitent un logement inférieur 34 de section rectangulaire dans lequel est reçu avec jeu le talon supérieur plein 36, de section rectangulaire, de la raclette inférieure d'essuyage 14.

La raclette 14 est de conception générale connue et comporte à sa partie inférieure une lame inférieure d'essuyage 38 qui se termine par un bord inférieur 40 d'essuyage de la face 22 de la vitre 24.

On décrira maintenant en détails la partie supérieure du balai d'essuie-glace 10 qui constitue essentiellement le déflecteur aérodynamique 16 et plus particulièrement les différents aspects de forme et de profil de son contour en section par un plan vertical transversal.

Ce contour est globalement triangulaire avec :

- une base ou côté inférieur AM qui est rectiligne et horizontal et qui s'étend au-dessus du fond plat 28 du corps central 12 ;
- un côté amont AE globalement incurvé et concave ;
- et un côté aval FM d'orientation globalement verticale qui est relié à l'extrémité supérieure E du côté amont AE par le bord longitudinal supérieur 42 d'extrémité du déflecteur 16.

Le bord supérieur 42 est ici en section un demi-cercle convexe EF dont le diamètre définit la largeur ou épaisseur marginale "e" de la partie supérieure mince 44 du déflecteur aérodynamique 16.

On définit la hauteur totale du balai d'essuie-glace comme étant la distance verticale "H" qui sépare le sommet du bord supérieur 42 du déflecteur 16 du bord inférieur d'essuyage 40 de la lame inférieure d'essuyage 38

Le côté amont AE comporte un premier tronçon inférieur AC sensiblement rectiligne ou incurvé concave de très grand rayon qui, dans l'exemple illustré à la figure 1, s'étend du point A jusqu'au point C qui est situé sensiblement au niveau du plan de symétrie PVM. La droite AC forme avec l'horizontale, et par exemple avec le côté inférieur AM, un angle aigu "B" aussi appelé angle d'incidence du déflecteur 16.

L'angle B est positif, c'est à dire que le tronçon AC est "au dessus" du côté inférieur horizontal AM.

A partir du point C d'extrémité supérieure du premier tronçon inférieur AC, le côté amont AE comporte un tronçon intermédiaire incurvé concave CD qui est ici, à titre d'exemple un tronçon en arc de cercle concave de rayon constant "R".

A titre de variante non représentée, le tronçon intermédiaire concave Cd peut comporter plusieurs parties successives de rayons différents.

Au-delà du tronçon intermédiaire concave CD, le côté amont AE - qui délimite la face latérale principale amont, dite face au vent, du déflecteur aérodynamique 16 - comporte un troisième tronçon supérieur DE d'extrémité qui, dans l'exemple de la figure 1, est un tronçon rectiligne d'orientation verticale, c'est à dire parallèle au plan vertical de symétrie PVM.

Du fait de la situation du point C au niveau du plan PVM, la partie active principale du déflecteur aérodynamique 16 - constituée par le tronçon intermédiaire concave CD et par la pointe ou tronçon supérieur DE - est globalement située en arrière ou aval du plan vertical médian PVM.

On appelle hauteur marginale "Hv", la distance verticale qui sépare le point D le plus bas du troisième tronçon supérieur DE du sommet du bord supérieur 42 du déflecteur 16.

On appelle hauteur Hsp du déflecteur 16, la distance verticale qui sépare le côté inférieur AM du sommet du bord supérieur 42 du déflecteur 16.

Le côté aval MF comporte un premier tronçon inférieur MJ incurvé concave qui est ici, à titre d'exemple un tronçon sensiblement en arc de cercle.

Le premier tronçon inférieur concave MJ comporte un point intermédiaire K qui est le point de ce tronçon qui est situé transversalement le plus à l'intérieur, c'est à dire le plus proche du plan de symétrie PVM.

Le point K est ainsi situé à une distance horizontale "P" du bord vertical aval NQ du corps central 12 qui est ici un tronçon rectiligne vertical qui est aligné verticalement avec le troisième tronçon supérieur GF d'extrémité du côté aval MF qui est un tronçon vertical rectiligne parallèle au tronçon DE du côté amont AE. P est ainsi la distance séparant le point K du point du tronçon supérieur arrière FG situé le plus en arrière, c'est à dire le plus éloigné du plan PVM.

Dans l'exemple illustré à la figure 1, la longueur ou hauteur du tronçon GF est supérieure à la longueur ou hauteur du tronçon DE.

Entre le premier tronçon inférieur MJ et le troisième tronçon supérieur GF, le côté aval MF comporte un deuxième tronçon intermédiaire JG qui est un tronçon incurvé convexe qui est ici globalement en arc de cercle et sensiblement parallèle au tronçon concave CD, mais de rayon légèrement supérieur à ce dernier et non concentrique.

Le point le plus bas M du côté aval MF est ici relié au point supérieur N du bord vertical aval NQ du corps central 12 par un tronçon MN en arc de cercle convexe, de même que le point inférieur Q est relié au bord ou face inférieure 30 du corps central 12 par un tronçon QS en arc de cercle convexe.

Le bord amont ou bord d'attaque 46 du balai d'essuie-glace est ici le bord d'attaque du corps central 12 qui est le bord, ou surface du profil, situé le plus en amont dans l'écoulement fluide ou flux d'air relatif auquel est soumis le balai d'essuie-glace 10.

Le bord d'attaque 46 comporte un tronçon vertical rectiligne amont VU dont le point supérieur est relié au point le A plus bas du côté amont AE du déflecteur aérodynamique 16 par un tronçon VA incurvé convexe sensiblement en arc de cercle, et dont le point inférieur U Q est relié au bord ou face inférieure 30 du corps central 12 par un tronçon UT en arc de cercle convexe.

La largeur totale hors-tout "L" du balai d'essuie-glace correspond ainsi à la distance horizontale qui sépare les bords ou tronçons verticaux externes amont VU et aval NQ du corps central 12.

Conformément à un premier aspect de l'invention, le rapport largeur totale L / hauteur totale H, est tel que :

$$1,5 \leq H/L \leq 2.$$

Par exemple à la figure 1, pour une hauteur totale L d'environ 20mm, la largeur totale L est d'environ 10mm.

Conformément à un autre aspect de l'invention, l'angle d'incidence B est positif, et de préférence est tel que :

$$5 \text{ degrés} \leq B \leq 35 \text{ degrés.}$$

Par exemple à la figure 1, l'angle B est d'environ 15 degrés.

Le rayon R du tronçon intermédiaire concave CD est compris entre 50% et 70% de la largeur totale hors-tout L.

Le rayon de courbure R du tronçon intermédiaire concave CD est ainsi compris entre 5mm et 7mm et la hauteur totale Hsp du déflecteur aérodynamique 16 est de l'ordre de 7,5mm.

Plus l'angle B est faible et plus le rayon R est faible, plus le déflecteur aérodynamique 16 est dit "creusé".

Conformément à encore un autre aspect de l'invention, l'épaisseur marginale e du déflecteur aérodynamique 16 est telle que :

$$8\% \text{ de } L \le e \le 15\% \text{ de } L.$$

L'épaisseur e de la partie d'extrémité supérieure du déflecteur aérodynamique 16 est sensiblement égale à 1 mm.

Conformément à encore un autre aspect de l'invention, la hauteur marginale Hv du déflecteur aérodynamique 16 est telle que :

$$15\% \text{ de } Hsp \le Hv \le 25\% \text{ de } Hsp.$$

Ainsi, toujours à la figure 1, la hauteur résultante Hv est de l'ordre de 1,5 mm.

Conformément à encore un autre aspect de l'invention, la distance ou "creux" P de la face arrière sous le vent du déflecteur est telle que :

$$20\% \text{ de } L \le P \le 25\% \text{ de } L.$$

Ainsi, P est par exemple de l'ordre de 2mm.

S'agissant du bord d'attaque 46 sa finesse, c'est à dire la distance verticale "Ha" qui sépare le point A du point V, elle est telle que :

$$Ha \le 1/3 \text{ de } L.$$

Ha est ainsi comprise entre 0,5mm et 3mm.

Les déflecteurs rapportés ou extrudés ou moulés, sont généralement définis par une forme globale ou par un angle moyen de l'aile par rapport au plan du pare brise à essuyer.

Les déflecteurs ainsi construits sont d'une efficacité limitée, voire inefficaces, d'où une perte de performances, donc de qualité d'essuyage et un risque vis-à-vis de la sécurité

Certains mêmes de ces profils génèrent des turbulences qui favorisent le phénomène de "water drag back ou water pull back", c'est-à-dire que le balai entraîne l'eau qu'il vient de balayer lorsqu'il revient vers sa position en bas de pare brise.

La performance aérodynamique d'un profil est la combinaison de plusieurs critères tels que :

- la portance (Lift) ;
- la traînée (Drag) ;
- le point de rattachement ("re-attachment point"), définissant la distance de rattachement des flux d'air à l'arrière ou aval du profil.

Ces différents critères évoluent en fonction :

- des dimensions globales du profil et notamment du rapport hauteur H/largeur L) ;
- de la géométrie du bord d'attaque, qui est la surface du profil la plus en amont dans l'écoulement de fluide située en dessous de la face active au vent du déflecteur aérodynamique ;
- de la géométrie même du déflecteur 16 ou spoiler, et en particulier, de son angle d'incidence B, de sa courbure concave R, et de sa hauteur marginale Hv ;
- des surfaces portantes projetées, à l'avant, au milieu (déflecteur, pointe incluse) ou à l'arrière du profil.

L'état de l'art montre et après vérification par simulation théorique en deux dimensions, qu'un profil ayant globalement H=L (c'est à dire H/L=1), avec un niveau de performance en portance de x N/m, peut, conformément aux enseignements de l'invention être facilement amélioré et de façon notable si l'on obtient H>L avec un rapport compris entre 1,5 et 2.

Plus le rapport H/L est élevé, plus la performance en portance est importante, tandis que celle de la traînée diminue, en ayant pour effet une "prise au vent" importante qui influe sur la régularité du cycle d'essuyage, mais aussi sur le phénomène de retour d'eau.

Le principe des solutions proposées selon la présente invention consiste à d'obtenir le meilleur compromis dimensionnel, donc un rapport dimensionnel H/L d'une valeur comprise entre 1,5 et 2.

En deçà de cette fourchette on obtient une performance en portance moyenne avec une traînée faible, et au-delà on obtient une performance en portance importante, la traînée étant par contre élevée et pouvant provoquer les phénomènes mentionnés ci-dessus.

En réduisant la largeur L, en gardant une hauteur H initiale, dans un rapport H/L de 1,5 à 2, la performance en portance augmente, tandis que la traînée et la distance du point de rattachement restent stables.

La partie active du déflecteur est décalée vers l'arrière du profil de manière à accroître la performance de même que le creux "P" formé dans la partie arrière du profil qui permet de réduire les turbulences.

En adaptant d'une part certaines géométries propres au déflecteur, en particulier le bord d'attaque, l'angle d'incidence B et la courbure R de la surface concave et la hauteur verticale marginale Hv du déflecteur, on améliore la canalisation et le guidage des flux d'air sur la surface du déflecteur afin de diminuer les perturbations aérodynamiques et donc d'améliorer le comportement du profil.

Le profil et la forme du bord d'attaque est la surface du balai la plus en amont dans l'écoulement fluide, pour un angle d'attaque nul, c'est à dire lorsque le balai d'essuie-glace est dans sa position illustrée à la figure 1 dans laquelle le plan PVM est orthogonal à la surface 22 à essuyer.

L'écoulement est en première approximation séparé en deux parties, une partie inférieure assurant une re-circulation en pied de la lame d'essuyage 38 et une autre partie supérieure allant interagir avec le déflecteur aérodynamique 16 du balai d'essuyage 10. Le rôle du bord d'attaque est de guider de manière adéquate l'écoulement sur le déflecteur afin d'obtenir le meilleure effet d'appui.

Afin d'éviter tout décollement du fluide au niveau du bord d'attaque, ce dernier doit s'insérer le mieux possible dans l'écoulement. Pour différentes raisons dimensionnelles liées à un encombrement en largeur maximum pour rester dans un rapport H/L entre 1.5 et 2, et pour des raisons liées aux procédés de fabrication et d'obtention, il n'est parfois pas possible d'obtenir un bord d'attaque aussi fin que souhaité dans les proportions mentionnées plus haut. De ce fait, le décollement sera réduit au maximum en gardant un rayon faible pour le tronçon VA et une "non-angularité", c'est à dire une absence d'angles vifs, pour perturber au minimum le flux d'air.

L'angle d'incidence B correspond globalement à la pente entre la fin du bord d'attaque correspondant au point A et le début de la courbure concave CE du déflecteur 16.

Dans le cadre des contraintes dimensionnelles et de fabrication mentionnées ci-dessus, l'angle d'incidence B permet au flux d'air d'être guidé et de rester en contact avec la surface active Cd + DE du déflecteur aérodynamique 16. La valeur de cet angle B doit être comprise entre 5 et 35 degrés d'angle. En deçà de 5 degrés, le flux d'air percute la surface concave active du déflecteur en créant un tourbillon et en créant ainsi une perturbation. Au-delà de 35 degrés, le flux d'air est dévié par la pente du premier tronçon AC et il n'est plus guidé le long de la surface concave active CD du déflecteur aérodynamique 16. Donc, pour des pentes extrêmes, le flux passe alors "au-dessus" de la surface concave active, ce qui provoque une inefficacité du déflecteur et donc une performance aérodynamique faible.

La courbure concave Cd de rayon R du déflecteur aérodynamique 16 permet, comme pour l'angle d'incidence B, de guider le flux d'air jusque sur la surface verticale supérieure DE du déflecteur aérodynamique 16, idéalement sans décrochement des filets d'air le long de la surface amont. L'avantage de la courbure concave CD est de "freiner" le flux d'air au niveau du déflecteur et de créer ainsi une surpression. Une partie de cette surpression est convertie en portance, c'est à dire en force d'appui, opposée au soulèvement ou décollement du balai et de la lame d'essuyage, et l'autre partie en force de traînée.

L'effet est plus prépondérant que pour un déflecteur à face au vent AE sensiblement rectiligne qui laisse le fluide glisser sur cette surface amont, sans générer localement de surpression suffisamment importante pour obtenir un effet d'appui.

A l'inverse, une surface concave CD du déflecteur aérodynamique 16 trop creusée ne fournit pas de performances acceptables, surtout pour des angles d'attaques négatifs, en raison de la génération d'une zone locale de basses pressions caractérisée par un tourbillon, généré par le décrochage du fluide au niveau du bord d'attaque ou le long du déflecteur. Ainsi, la forme du bord d'attaque et la courbure du déflecteur doivent être optimisés ensemble pour une gamme d'angles d'attaque de la lame d'essuyage compris entre -10 et +10 degrés.

L'accroissement relatif de la hauteur marginale Hv permet d'accroître la performance du déflecteur, notamment pour les angles d'attaque négatifs. Cela permet aussi de réduire les éventuelles influences des zones tourbillonnaires présentes au pied du déflecteur et qui peuvent être dues à une optimisation partielle et non totale du bord d'attaque, en raison des contraintes liées à la fabrication et à la production. Cela permet aussi d'augmenter, pour les angles d'attaque négatifs, la surface projetée portante en surpression (effet d'appui). Par contre, cela induit également une augmentation importante de la force de traînée pour des angles d'attaque nul, ce qui conduit à optimiser cette hauteur verticale marginale pour trouver le meilleur compromis traînée - déportance.

En effet, il est à noter que la performance aérodynamique du profil doit être la plus optimale possible dans toutes les positions du balai d'essuie-glace par rapport à la surface 22 du pare-brise ou de la vitre à essuyer. Les simulations en deux dimensions montrent qu'un profil peut avoir une bonne performance pour un angle d'attaque nul, et voir ses performances fortement diminuées dans des positions plus extrêmes. Ces positions extrêmes définies par expériences évoluent en valeur d'angle d'attaque entre -10 et +10 degrés par rapport à la position verticale théorique sur pare-brise et correspondent aux positions aller et retour du balai d'essuie-glace au cours de l'essuyage par mouvement de balayage alterné.

La géométrie de la pointe supérieure du déflecteur aérodynamique 16 est aussi dimensionnée et positionnée avec précision car elle influe sur la performance globale du profil du déflecteur aérodynamique 16. En effet, plus la surface projetée est faible, plus la performance du profil dans une position à +10 degrés est élevée.

La pointe du déflecteur doit être la plus fine possible afin de réduire la surface portante projetée, la limite étant donnée par les contraintes de production. Elle doit également permettre au flux d'air de rester attaché et elle doit orienter ce dernier afin de réduire la taille de la zone de recirculation à l'arrière du balai.

On décrira maintenant différentes variantes de réalisation illustrées aux figures 2 et suivantes, les figures 2, 3 et 6 n'etant pas couvertes par la revendication 1.

Le balai d'essuie-glace 10 illustré à la figure 2 est globalement analogue à celui de la figure 1.

Les tronçons AV de bord d'attaque et MN sont symétriques par rapport au plan PVM et de profil en arc de cercle convexe.

La partie supérieure fine et d'orientation verticale 44 du déflecteur aérodynamique 16 est globalement décalée transversalement vers l'intérieur en direction du plan PVM. Il existe ainsi un décalage "d" qui est la distance horizontale.

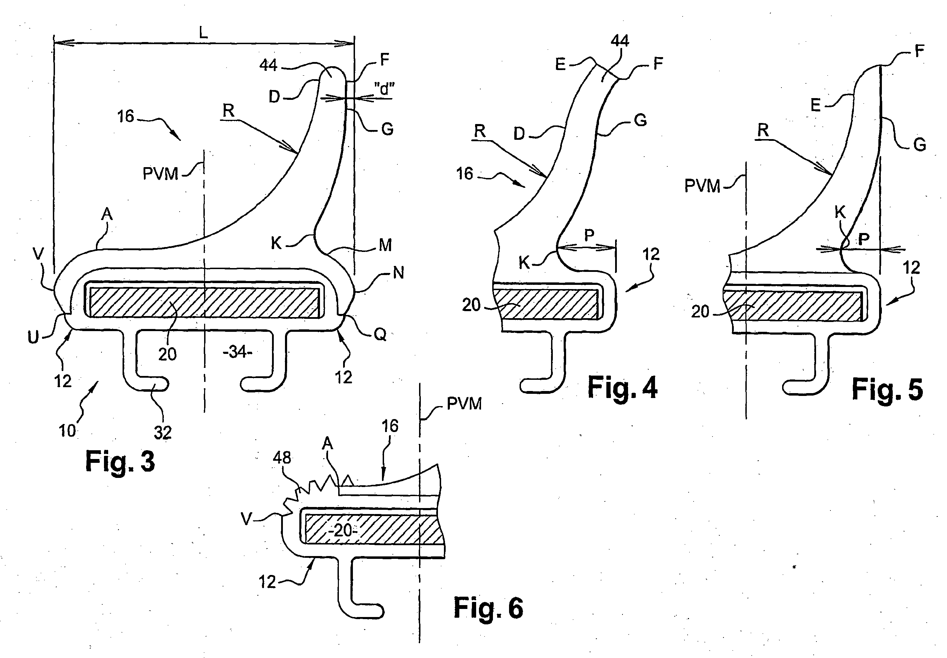

La partie supérieure du balai d'essuie-glace 10 illustré à la figure 3 est globalement analogue à celui de la figure 1.

Les tronçons AV de bord d'attaque et MN sont symétriques par rapport au plan PVM et de profil en arc de cercle convexe de plus grand rayon.

La partie supérieure fine et d'orientation verticale 44 du déflecteur aérodynamique 16 est globalement décalée transversalement vers l'intérieur en direction du plan PVM. Il existe ainsi un décalage "d" qui est la distance horizontale.

De plus, en dessous du plan horizontal passant par les points symétriques et opposés V et N, c'est à dire en dessous du bord d'attaque, les tronçons amont VU et aval NQ ne sont plus verticaux mais inclinés en direction du plan PVM de manière à favoriser le partage du flux d'air en deux parties sans angles vifs trop important grâce à la transition entre le tronçon en arc de cercle de grand rayon AV et le tronçon rectiligne VU.

Dans la variante de réalisation illustrée à la figure 4, en la comparant avec la figure 1, on constate que les troisièmes tronçons supérieurs amont DE et aval FG ne sont plus rectilignes et verticaux, mais incurvés en arc de cercle convexe et concave respectivement.

Ainsi le point E d'extrémité supérieure du tronçon DE est plus haut que le point F d'extrémité supérieure du tronçon GF avec un "bord" supérieur libre de la partie fine 44 qui est plat, c'est à dire que le tronçon EF est rectiligne.

Dans la variante de réalisation illustrée à la figure 5, en la comparant avec la figure 1, on constate que le troisième tronçon supérieur aval FG est rectiligne et vertical avec son point d'extrémité supérieure F qui est le point le plus haut du déflecteur 16, tandis que le tronçon EF correspondant au bord supérieur de la partie fine 44 est un quart de cercle convexe.

Dans la variante de réalisation illustrée à la figure 6, en la comparant avec la figure 1, on constate que le bord d'attaque AV comporte des nervures longitudinales 48. En section dans le plan de la figure, chaque nervure peut avoir un profil triangulaire ou sensiblement carrée ou trapézoïdale. La hauteur des nervures, leurs nombres et leur répartition peut varier sans sortir du cadre de l'invention de même que leur profil qui peut aussi par exemple être arrondi et convexe.

Selon encore d'autres variantes non représentées :

- le bord supérieur du déflecteur aérodynamique correspondant au tronçon EF peut comporter des crans ou entailles ou ondulations qui sont répartis longitudinalement le long de ce bord de fuite du déflecteur aérodynamique ;
- le profil tronçon concave CE de la partie active au vent du déflecteur aérodynamique n'est nécessairement en arc de cercle de rayon constant mais peut aussi comporter plusieurs parties consécutives concaves de rayons différents ;

- de manière connue, il est aussi possible de prévoir des passages ou canaux traversant transversalement la partie inférieure du déflecteur aérodynamique qui forment des venturi débouchant dans la face arrière sous le vent, de façon à réduire la traînée et le phénomène de "water pull back".

**Revendications**

1. Balai d'essuie-glace (10) de véhicule automobile du type comportant :

   - une monture de support d'orientation principale longitudinale, qui comporte un corps tubulaire (12) d'axe principal longitudinal délimité par une paroi horizontale supérieure, une paroi horizontale inférieure et par deux parois latérales longitudinales verticales et formant logement interne de contour rectangulaire délimité par une paroi horizontale supérieure, une paroi horizontale inférieure et deux parois latérales longitudinales verticales, et des moyens inférieurs (32) de support d'une raclette d'essuyage;
   - un élément longitudinal central (20) de rigidification agencé dans le corps tubulaire (12) ;
   - une raclette (14) d'essuyage de la vitre (22, 24) à essuyer qui s'étend longitudinalement en dessous de l'élément central (20) et qui comporte un bord longitudinal inférieur d'essuyage (40) qui coopère avec la face supérieure (22) de la vitre (24) à essuyer ; et
   - un élément formant déflecteur aérodynamique (16) qui s'étend longitudinalement au-dessus de l'élément central de rigidification (20) et le long d'au moins un tronçon de ce dernier et qui, en section par un plan vertical transversal, présente un contour (AE-FM-MA) de forme globalement triangulaire comportant un côté inférieur horizontal de base (AM), un côté amont (AE) qui délimite la face au vent du déflecteur aérodynamique (16), ledit coté amont (AE) comportant un tronçon inférieur (AC), un tronçon intermédiaire (CD) sensiblement en arc de cercle concave et un tronçon d'extrémité supérieur (DE), un côté aval (FM) d'orientation globalement verticale qui délimite la face sous le vent du déflecteur et qui est relié au côté amont (AE) par un tronçon (EF) qui délimite le bord longitudinal supérieur (42) d'extrémité libre supérieure du déflecteur,

   le rapport (H/L) entre la hauteur totale (H) du balai d'essuie-glace (10) séparant le bord supérieur (42) du déflecteur aérodynamique (16) du bord inférieur d'essuyage (40), et la largeur transversale hors-tout (L) du balai d'essuie-glace (10), mesurée dans le plan de l'élément de rigidification (20), étant compris entre 1,5 et 2, le tronçon inférieur (AC) étant sensiblement rectiligne, formant un angle aigu (B) par rapport au bord inférieur horizontal (AM) et s'étendant sensiblement jusqu'au droit d'un plan vertical médian (PVM) de l'élément central de rigidification (20) et de la raclette inférieure d'essuyage (14).

2. Balai d'essuie-glace selon la revendication précédente, **caractérisé en ce que** ledit angle aigu (B) est compris entre 5 et 35 degrés.

3. Balai d'essuie-glace selon l'une des revendications précédentes, **caractérisé en ce que** le rayon R dudit tronçon intermédiaire concave (CD) est compris entre 50% et 70% de ladite largeur totale hors-tout (L).

4. Balai d'essuie-glace selon l'une des revendications précédentes, **caractérisé en ce que** ledit tronçon supérieur (DE) d'extrémité du côté amont est sensiblement rectiligne et d'orientation verticale.

5. Balai d'essuie-glace selon l'une des revendications précédentes, **caractérisé en ce que** le tronçon supérieur d'extrémité (DE) du côté amont est sensiblement en arc de cercle convexe.

6. Balai d'essuie-glace selon la revendication 4 ou 5, **caractérisé en ce que** ledit tronçon supérieur (DE) d'extrémité du côté amont s'étend sur une hauteur verticale marginale (Hv) qui est comprise entre 15% et ≤ 25% de la hauteur totale (Hsp) du déflecteur aérodynamique (16).

7. Balai d'essuie glace selon l'une quelconque des revendications précédentes, **caractérisé en ce que** le côté aval (MF) du contour triangulaire comporte un tronçon supérieur (GF) qui est globalement parallèle à un tronçon supérieur (DE) du côté amont (AE).

8. Balai d'essuie-glace selon l'une quelconque des revendications précédentes **caractérisé en ce que** le côté aval (MF) du contour triangulaire comporte un tronçon intermédiaire (JG) qui est globalement parallèle à un tronçon intermédiaire (CD) du côté amont (AE).

9. Balai d'essuie-glace selon la revendication 7 prise en combinaison avec la revendication 4, **caractérisé en ce que** le tronçon supérieur rectiligne (GF) du côté aval (MF) s'étend au droit du bord latéral aval (NQ) de l'élément central de rigidification (20).

10. Balai d'essuie-glace selon l'une quelconque des revendications précédentes, **caractérisé en ce que** le côté aval (MF) du contour triangulaire comporte un tronçon inférieur (MJ) en arc de cercle concave.

11. Balai d'essuie-glace selon la revendication précédente, **caractérisé en ce que** le point (K) transversalement le plus intérieur du tronçon inférieur (MJ) en arc de cercle concave du côté aval (MJ) est situé transversalement en retrait vers l'intérieur par rapport au bord latéral aval (NQ) de l'élément central de rigidification (20).

12. Balai d'essuie-glace selon la revendication précédente, **caractérisé en ce que** la distance horizontale (P) séparant ledit point le plus intérieur du bord latéral aval de l'élément central de support est comprise entre 15% et 25% de ladite largeur totale hors-tout (L).

13. Balai d'essuie-glace selon l'une quelconque des revendications précédentes, **caractérisé en ce que** le tronçon (EF) qui délimite le bord supérieur (42) du déflecteur aérodynamique (16) est de forme semi-circulaire.

14. Balai d'essuie-glace selon la revendication 7, **caractérisé en ce que** l'épaisseur (e) de la partie supérieure du déflecteur aérodynamique (16) séparant les deux tronçons supérieurs verticaux et rectilignes (DE, FG) est comprise entre 8% et 15% de ladite largeur totale hors-tout (L).

**Patentansprüche**

1. Scheibenwischer (10) für ein Kraftfahrzeug von der Art mit folgenden Teilen:

- Ein Stützrahmen mit hauptsächlicher Längsausrichtung, der einen röhrenförmigen Körper (12) mit Hauptlängsachse umfaßt, der von einer oberen waagrechten Wand, einer unteren waagrechten Wand und von zwei senkrechten Länglichen Seitenwänden abgegrenzt wird und, der eine innere Aufnahme mit rechteckiger Kontur bildet, die von einer oberen waagrechten Wand, einer unteren waagrechten Wand und zwei senkrechten länglichen Seitenwänden abgegrenzt wird, und untere Stützmittel (32) für einen Wischergummi;
- Ein mittleres Versteifungselement (20), das im röhrenförmigen Körper (12) gestaltet ist;
- Ein Wischergummi (14) für die zu wischende Scheibe (22, 24), der sich unter dem mittleren Element (20) längs erstreckt, und der eine untere Längskante zum Wischen (40) umfaßt, die mit der Oberseite (22) der zu wischenden Scheibe (24) zusammenarbeitet;
- Ein Element, das einen aerodynamischen Umlenker (16) bildet, das sich über dem mittleren Versteifungselement (20) längs und an mindestens einem Abschnitt des letzteren entlang erstreckt, und das im Querschnitt durch eine querlaufende senkrechte Ebene eine Kontur (AE-FM-MA) von insgesamt dreieckiger Form aufweist, die eine untere waagrechte Basisseite (AM) umfaßt, eine obere Seite (AE), die die dem Wind zugewandte Fläche des aerodynamischen Umlenkers (16) begrenzt, wobei die besagte obere Seite (AE) einen unteren Abschnitt (AC), einen Zwischenabschnitt (CD) deutlich im konkaven Kreisbogen und einen oberen Endabschnitt (DE), sowie eine untere Seite (FM) mit insgesamt senkrechter Ausrichtung umfaßt, die die im Wind stehende Fläche des Umlenkers abgrenzt, und die mit der oberen Seite (AE) durch einen Abschnitt (EF) verbunden ist, der die obere Längskante (42) des freien oberen Endes des Umlenkers begrenzt, wobei das Verhältnis (H/L) zwischen der Gesamthöhe (H) des Scheibenwischers (10), die die Oberkante (42) des aerodynamischen Umlenkers (16) von der unteren Wischkante (40) trennt, und der querverlaufenden Gesamtbreite (L) des Scheibenwischers (10), die in der Ebene des Versteifungselements (20) gemessen wird, zwischen 1,5 und 2 beträgt, wobei der untere Abschnitt (AC) deutlich geradlinig ist, einen spitzen Winkel (B) im Verhältnis zur unteren waagrechten Kante (AM) bildet und sich deutlich bis vor eine senkrechte mittlere Ebene (PVM) des mittleren Versteifungselements (20) und des unteren Wischergummis (14) erstreckt.

2. Scheibenwischer nach vorstehendem Anspruch, **dadurch gekennzeichnet, daß** der besagte spitze Winkel (B) von 5 bis 35 Grad beträgt.

3. Scheibenwischer nach einem beliebigen der vorstehendem Ansprüche, **dadurch gekennzeichnet, daß** der Radius R des besagten konkaven Zwischenabschnitts (CD) zwischen 50% und 70% der besagten Gesamtbreite (L) beträgt.

4. Scheibenwischer nach einem beliebigen der vorstehendem Ansprüche, **dadurch gekennzeichnet, daß** der besagte obere Endabschnitt (DE) der oberen Seite deutlich geradlinig und senkrecht ausgerichtet ist.

5. Scheibenwischer nach einem beliebigen der vorstehendem Ansprüche, **dadurch gekennzeichnet, daß** der obere Endabschnitt (DE) der oberen Seite deutlich konvex kreisbogenförmig ist.

6. Scheibenwischer nach Anspruch 4 oder 5, **dadurch gekennzeichnet, daß** sich der besagte obere Endabschnitt (DE) der oberen Seite über eine senkrechte Kantenhöhe (Hv) erstreckt, die zwischen 15% und ≤ 25% der Gesamthöhe (Hsp) des aerodynamischen Umlenkers (16) beträgt.

7. Scheibenwischer nach einem beliebigen der vorstehendem Ansprüche, **dadurch gekennzeichnet, daß** die untere Seite (MF) der dreieckigen Kontur einen oberen Abschnitt (GF) umfaßt, der insgesamt parallel zu einem oberen Abschnitt (DE) der oberen Seite (AE) ist.

8. Scheibenwischer nach einem beliebigen der vorstehenden Ansprüche, **dadurch gekennzeichnet, daß** die untere Seite (MF) der dreieckigen Kontur einen mittleren Abschnitt (JG) umfaßt, der insgesamt parallel zu einem mittleren Abschnitt (CD) der oberen Seite (AE) ist.

9. Scheibenwischer nach Anspruch 7 in Kombination mit Anspruch 4 genommen, **dadurch gekennzeichnet, daß** sich der obere geradlinige Abschnitt (GF) der unteren Seite (MF) vor der unteren Seitenkante (NQ) des mittleren Versteifungselements (20) erstreckt.

10. Scheibenwischer nach einem beliebigen der vorstehendem Ansprüche, **dadurch gekennzeichnet, daß** die untere Seite (MF) der dreieckigen Kontur einen konkav kreisbogenförmigen unteren Abschnitt (MJ) umfaßt.

11. Scheibenwischer nach dem vorstehenden Anspruch, **dadurch gekennzeichnet, daß** der Punkt (K), der sich quer gesehen an der innersten Stelle des konkav kreisbogenförmigen unteren Abschnitts (MJ) der unteren Seite (MJ) befindet, quer gesehen der unteren Seitenkante (NQ) des mittleren Versteifungselements (20) gegenüber nach innen zurückgesetzt ist.

12. Scheibenwischer nach dem vorstehenden Anspruch, **dadurch gekennzeichnet, daß** der waagrechte Abstand (P), der den besagten sich an der innersten Stelle befindlichen Punkt von der unteren Seitenkante des mittleren Stützelements trennt, zwischen 15% und 25% der besagten Gesamtbreite (L) ausmacht.

13. Scheibenwischer nach einem beliebigen der vorstehendem Ansprüche, **dadurch gekennzeichnet, daß** der Abschnitt (EF), der die obere Kante (42) des aerodynamischen Umlenkers (16) begrenzt, halbrund ist.

14. Scheibenwischer nach Anspruch 7, **dadurch gekennzeichnet, daß** die Dicke (e) des oberen Teils des aerodynamischen Umlenkers (16), der die beiden oberen senkrechten und geradlinigen Abschnitte (DE, FG) trennt, zwischen 8% und 15% der besagten Gesamtbreite (L) ausmacht.

**Claims**

1. A wiper (10) for a motor vehicle of the type including:

    - a supporting mount having a main longitudinal direction, which includes a tubular body (12) having a main longitudinal axis limited by an upper horizontal wall, a lower horizontal wall and by two vertical longitudinal side walls and forming an inner housing having a rectangular contour limited by an upper horizontal wall, a lower horizontal wall and two vertical longitudinal side walls and lower means (32) supporting a wiping blade;
    - a central longitudinal stiffening element (20) arranged in the tubular body (12);
    - a blade (14) for wiping the window (22, 24) to be wiped, which extends longitudinally under the central element (20) and which includes a lower longitudinal wiping edge (40) which cooperates with the upper face (22) of the window (24) to be wiped; and
    - an aerodynamic deflector (16) forming element, which extends longitudinally above the central stiffening element (20) and along at least one segment thereof and which, in cross-section through a transversal vertical plane, has a contour (AE-FM-MA) having a substantially triangular shape including a lower horizontal base (AM) side, an upstream side (AE) which limits the windward face of the aerodynamic deflector (16), said upstream side (AE) including a lower segment (AC), an intermediary segment (CD) having substantially the shape of a concave arc of circle and an upper end segment (DE), a downstream side (FM) having a substantially vertical direction which delimits the leeward face of the deflector and which is connected to the upstream side (AE) by a segment (EF) which delimits the upper longitudinal edge (42) of the upper free end of the deflector,

    with the ratio (H/L) of the total height (H) of the wiper (10) separating the upper edge (42) of the aerodynamic deflector (16) and the lower wiping edge (40), and the transversal overall width (L) of the wiper (10), measured in the plane of the stiffening element (20) being between 1.5 and 2, the lower segment (AC) being substantially rectilinear, forming an acute angle (B) with respect to the lower horizontal edge (AM) and substantially extending until it is aligned with a median vertical plane (PVM) of the central stiffening element (20) and the lower wiping blade (14).

2. A wiper according to the preceding claim, **characterised in that** said acute angle (B) is between 5 and 35 degrees.

3. A wiper according to one of the preceding claims, **characterised in that** the radius R of said concave intermediary segment (CD) is between 50% and 70% of said transversal overall width (L).

4. A wiper according to one of the preceding claims, **characterised in that** said upper end segment (DE) on the upstream side is substantially rectilinear and has a vertical direction.

5. A wiper according to one of the preceding claims, **characterised in that** the upper end segment (DE) on the upstream side substantially has the shape of a convex arc of circle.

6. A wiper according to one of claims 4 and 5, **characterised in that** said upper end segment (DE) on the upstream side extends along a marginal vertical height (Hv) between 15% and 25% of the total height (Hsp) of the aerodynamic deflector (16).

7. A wiper according to any one of the preceding claims, **characterised in that** the downstream side (MF) of the triangular contour includes an upper segment (GF) which is substantially parallel to an upper segment (DE) on the upstream side (AE).

8. A wiper according to any one of the preceding claims, **characterised in that** the downstream side (MF) of the triangular contour includes an intermediary segment (JG) which is substantially parallel to an intermediary segment (CD) on the upstream side (AE).

9. A wiper according to claim 7 taken together with claim 4, **characterised in that** the upper rectilinear segment (GF) of the downstream side (MF) extends in alignment with the downstream side edge (NQ) of the central stiffening element (20).

10. A wiper according to any one of the preceding claims, **characterised in that** the downstream side (MF) of the triangular contour includes a lower segment (MJ) having the shape of a concave arc of circle.

11. A wiper according to the preceding claim, **characterised in that** the transversally innermost point (K) of the lower segment (MJ) having the shape of a concave arc of circle on the downstream side (MJ) is transversally set back inwards with respect to the downstream side edge (NQ) of the central stiffening element (20).

12. A wiper according to the preceding claim, **characterised in that** the horizontal distance (P) separating said innermost point of the downstream side edge from the central supporting element is between 15% and 25% of said transversal overall width (L).

13. A wiper according to any one of the preceding claims, **characterised in that** the segment (EF) delimiting the upper edge (42) of the aerodynamic deflector (16) has a semi-circular shape.

14. A wiper according to claim 7, **characterised in that** the thickness (e) of the upper part of the aerodynamic deflector (16) between the two vertical straight upper segments (DE, FG) is between 8% and 15% of said transversal overall width (L).

**Fig. 1**

**Fig. 2**

EP 1 732 793 B2

Fig. 3

Fig. 4

Fig. 5

Fig. 6

**EP 1 732 793 B2**

## RÉFÉRENCES CITÉES DANS LA DESCRIPTION

**Documents brevets cités dans la description**

- US 6292974 B1
- US 20030145412 A1
- US 20020000018 A
- EP 1232922 A